# EUROPÄISCHE PATENTSCHRIFT

(11) **EP 2 898 666 B1**
(45) Veröffentlichungstag und Bekanntmachung des Hinweises auf die Patenterteilung: **09.08.2017**
(21) Anmeldenummer: 13763061.2
(22) Anmeldetag: 17.09.2013
(51) Int. Cl.: G06K 9/00, G08B 13/196, G06K 9/62, H04N 5/262, G06F 3/0488, G06K 9/68, H04N 5/232, H04N 7/18

(54) **CLIENT-EINRICHTUNG ZUR DARSTELLUNG VON KAMERABILDERN EINER STEUERBAREN KAMERA, VERFAHREN, COMPUTERPROGRAMM SOWIE ÜBERWACHUNGSSYSTEM MIT DER CLIENT-EINRICHTUNG**
CLIENT DEVICE FOR DISPLAYING IMAGES OF A CONTROLLABLE CAMERA, METHOD, COMPUTER PROGRAM AND MONITORING SYSTEM COMPRISING SAID CLIENT DEVICE
DISPOSITIF CLIENT POUR REPRÉSENTER DES IMAGES D'UNE CAMÉRA PILOTABLE, PROCÉDÉ, PROGRAMME D'ORDINATEUR AINSI QUE SYSTÈME DE SURVEILLANCE COMPRENANT LE DISPOSITIF CLIENT

(30) Priorität: 24.09.2012 DE 102012217148
(43) Veröffentlichungstag der Anmeldung: 29.07.2015
(73) Patentinhaber: Robert Bosch GmbH, 70442 Stuttgart (DE)
(72) Erfinder: HEIGL, Stephan, 30173 Hannover (DE); GOTTSCHLAG, Daniel, 90419 Nürnberg (DE)
(86) Internationale Anmeldenummer: PCT/EP2013/069237
(87) Internationale Veröffentlichungsnummer: WO 2014/044661

(56) Entgegenhaltungen:
- DE-A1- 10 222 203
- DE-A1-102004 040 023
- US-A1- 2011 085 016
- US-A1- 2012 127 319

## Beschreibung

### Stand der Technik

Die Erfindung betrifft eine Clienteinrichtung zur Darstellung von Kamerabildern einer steuerbaren Kamera mit einem Bildschirm, mit einer Anzeigeeinrichtung zum Anzeigen einer ersten Bilddarstellung auf dem Bildschirm, wobei die erste Bilddarstellung ein IST-Kamerabild in einem IST-Kamerasichtbereich der Kamera zeigt, mit einer Auswahleinrichtung, wobei die Auswahleinrichtung zur Auswahl eines SOLL-Kamerasichtbereichs der Kamera ausgebildet ist und mit einer Kommunikationseinrichtung, wobei die Kommunikationseinrichtung zur Anforderung und zum Empfang eines SOLL-Kamerabilds in dem SOLL-Kamerasichtbereich ausgebildet ist. Die Erfindung betrifft auch ein Verfahren mit der Clienteinrichtung, ein Computerprogramm für die Clienteinrichtung sowie ein Überwachungssystem mit der Clienteinrichtung.

Kameragestützte Überwachungsanlagen werden zur Sicherung von Gebäuden oder Plätzen eingesetzt. Derartige Überwachungsanlagen weisen oftmals mindestens eine Überwachungskamera auf, wobei diese als eine starre Überwachungskamera ausgebildet sein kann. Es sind jedoch auch sogenannte PTZ-Kameras (Pan-Tilt-Zoom-Kameras) bekannt, die mittels Stellmotor hinsichtlich des Schwenkwinkels, des Neigungswinkels und einer Vergrößerungseinstellung gesteuert werden können.

Die Druckschrift DE 10 2004 040023 A1 betrifft ein Verfahren zum Nachführen eines Objekts, eine Vorrichtung zum nachgeführten Anzeigen eines Objekts, eine Anordnung zum nachgeführten Anzeigen eines Objekts, ein Computerlesbares Speichermedium und ein Programm-Element.

In DE 102 22 203 A1 ist ein Bildüberwachungssystem beschrieben, wobei das Bildüberwachungssystem wenigstens einen Bildgeber aufweist, der mit einer Auswerteeinheit verbindbar ist, wobei die Auswerteeinheit eine Anzeige zur Ausgabe von einem Signal des wenigstens einen Bildgebers und einer Benutzeroberfläche (8) anschließbar ist, wobei ein manuell bewegliches Eingabemittel zum Zeichnen und zur Parametrierung des Bildüberwachungssystems an die Auswerteeinheit anschließbar ist, wobei auf der Anzeige ein repräsentatives Symbol für das Eingabemittel darstellbar ist.

Derartige PTZ-Kameras sind nicht nur im Bereich der Überwachungsanlagen bekannt. So offenbart die Druckschrift WO 2011/046448 A1, die den nächstkommenden Stand der Technik bildet, eine PTZ-Kamera für ein Konferenzsystem. In der Druckschrift wird das Problem erörtert, dass die Anforderung an die Einstellung der PTZ-Kamera für jede Konferenz unterschiedlich sein kann, sodass die PTZ-Kamera interaktiv gesteuert werden soll, um auf diese Weise das Sichtfeld der PTZ-Kamera an die jeweiligen Anforderungen anpassen zu können. Bei einer möglichen Ausgestaltung ist ein Touchscreen vorgesehen, wobei die Steuerbefehle für die PTZ-Kamera über den Touchscreen eingegeben werden.

### Offenbarung der Erfindung

Im Rahmen der Erfindung wird eine Clienteinrichtung mit den Merkmalen des Anspruchs 1, ein Verfahren mit den Merkmalen des Anspruchs 11, ein Computerprogramm mit den Merkmalen des Anspruchs 12 sowie ein Überwachungssystem mit den Merkmalen des Anspruchs 13 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Clientvorrichtung zur Darstellung von Kamerabildern einer steuerbaren Kamera vorgeschlagen. Die Clienteinrichtung kann als ein Computerarbeitsplatz, insbesondere als ein Personal Computer (PC) ausgebildet sein. Alternativ hierzu kann die Clientvorrichtung jedoch auch als ein mobiles Endgerät, insbesondere als ein Laptop, Smartphone oder Tablet realisiert sein.

Die Clientvorrichtung umfasst einen Bildschirm sowie eine Anzeigeeinrichtung, welche zur Ansteuerung des Bildschirms ausgebildet ist. Die Anzeigeeinrichtung kann beispielsweise als eine Datenverarbeitungseinrichtung, insbesondere als eine digitale Datenverarbeitungseinrichtung, ausgebildet sein. Der Bildschirm ist bevorzugt integraler Bestandteil der Clientvorrichtung. Die Anzeigeeinrichtung ist ausgebildet, eine erste Bilddarstellung auf dem Bildschirm anzuzeigen, wobei die erste Bilddarstellung als die auf dem Bildschirm angezeigten Bildinformationen definiert ist. Die erste Bilddarstellung ist ein IST-Kamerabild in einem IST-Kamerasichtbereich der Kamera. Das IST-Kamerabild ist bevorzugt ein aktuelles Kamerabild der steuerbaren Kamera. Der IST-Kamerasichtbereich wird vorzugsweise durch eine Ausrichtung und eine Vergrößerung und/oder einem Sichtwinkel der steuerbaren Kamera definiert.

Die Clientvorrichtung umfasst eine Auswahleinrichtung, welche insbesondere als eine Mensch-Maschinen-Schnittstelle ausgebildet ist, wobei die Auswahleinrichtung zur Auswahl eines SOLL-Kamerasichtbereichs der steuerbaren Kamera ausgebildet ist. Der SOLL-Kamerasichtbereich der Kamera wird durch eine geänderte Ausrichtung und/oder eine geänderte Vergrößerung bzw. einen geänderten Sichtwinkel der Kamera erreicht.

Ferner umfasst die Clientvorrichtung eine Kommunikationseinrichtung, welche zur Anforderung und zum Empfang eines SOLL-Kamerabilds in dem SOLL-Kamerasichtbereich ausgebildet ist. Während das IST-Kamerabild das Kamerabild ist, welches in dem IST-Kamerasichtbereich von der Kamera erfasst wird, ist das SOLL-Kamerabild das Kamerabild, das von der Kamera in dem SOLL-Kamerasichtbereich erfasst wird.

Im Rahmen der Erfindung wird vorgeschlagen, dass die Anzeigeeinrichtung ausgebildet ist, in einer zweiten Bilddarstellung das IST-Kamerabild zumindest abschnittsweise und in einer weiteren Bilddarstellung das SOLL-Kamerabild lagerichtig und größenrichtig in dem SOLL-Kamerasichtbereich anzuzeigen.

Nach oder bei der Auswahl des SOLL-Kamerasichtbereichs schaltet erfindungsgemäß die Clientvorrichtung ihren Bildschirm in eine zweite oder weitere Bilddarstellung, wobei Kamerabilder oder Teile davon des SOLL-Kamerasichtbereichs angezeigt werden. Tatsächlich sind diese Kamerabilder jedoch nicht oder nicht vollständig auf der Clientvorrichtung vorhanden, da sich die Kamera erst entsprechend ausrichten muss oder ihren Sichtwinkel/ihre Vergrößerung ändern muss. In diesem Fall wird das IST-Kamerabild in dem SOLL-Kamerasichtbereich lagerichtig und größenrichtig angezeigt. Das IST-Kamerabild wird somit auf dem Bildschirm derart verschoben und/oder skaliert, das heißt, vergrößert oder verkleinert, dass zumindest Teilabschnitte des IST-Kamerabilds lagerichtig und größenrichtig in dem nun zu zeigenden SOLL-Kamerasichtbereich angezeigt werden. Die verbleibende Fläche des SOLL-Kamerasichtbereich kann beispielsweise leer bleiben oder in einer Deckfarbe gezeigt werden.

Zu einem späteren Zeitpunkt wird über die Kommunikationseinrichtung das SOLL-Kamerabild geliefert, welches den SOLL-Kamerasichtbereich im idealen Fall zu hundert Prozent ausfüllt. In einer weiteren Bilddarstellung wird daher das SOLL-Kamerabild lagerichtig und größenrichtig in dem SOLL-Kamerasichtbereich angezeigt. Bei dem Übergang von der zweiten Bilddarstellung zu der weiteren Bilddarstellung überlappen auf dem Bildschirm ortsfeste, inhaltlich identische Bildbereiche des IST-Kamerabildes und des SOLL-Kamerabildes deckungsgleich.

Der Vorteil der Clientvorrichtung ist vor allem darin zu sehen, dass diese auf eine Auswahl mit der Auswahleinrichtung sehr schnell reagiert. So kann eine Einpassung des IST-Kamerabildes in dem SOLL-Kamerasichtbereich autark von der Clientvorrichtung durchgeführt werden, ohne dass weitere Daten von der steuerbaren Kamera angefordert und abgewartet werden müssen. Somit hängt die Reaktion der Clientvorrichtung zur Erzeugung der zweiten Bilddarstellung ausschließlich von der Rechenleistung der Clientvorrichtung selbst ab. Nachdem die Rechenleistungen von mobilen Endgeräten oder anderen Datenverarbeitungsanlagen mittlerweile sehr hoch sind, kann die zweite Bilddarstellung in der Wahrnehmung des Benutzers nahezu oder vollständig verzögerungsfrei durchgeführt werden.

Durch die Anforderung und den Empfang des SOLL-Kamerabilds tritt dagegen üblicherweise eine gewisse zeitliche Verzögerung oder Latenz auf. Insbesondere tritt diese zeitliche Verzögerung auf, da die steuerbare Kamera erst sich selbst so einstellen muss, dass diese den SOLL-Kamerasichtbereich aufnimmt. Aus diesem Grund erfolgt die weitere Bilddarstellung mit dem SOLL-Kamerabild erst zu einem späteren Zeitpunkt. Trotzdem stellt das Interaktionsverfahren der Clientvorrichtung einen unmittelbaren Zusammenhang zwischen Bedieneraktion über die Auswahleinrichtung und Anzeige über die Anzeigeeinrichtung und ergänzend zur Steuerung der steuerbaren Kamera her und erlaubt so eine sehr intuitive, genaue und komfortable Bedienung sowie Ansteuerung der steuerbaren Kamera.

Bei einer bevorzugten Weiterbildung der Erfindung ist vorgesehen, dass die Anzeigeeinrichtung ausgebildet ist, bei mindestens einer, der weiteren Bilddarstellung vorgeschalteten Zwischenbilddarstellung, ein ZWISCHEN-Kamerabild in einem ZWISCHEN-Kamerasichtbereich in dem SOLL-Kamerasichtbereich lagerichtig und größenrichtig anzuzeigen. Dieser Weiterbildung liegt die Überlegung zugrunde, dass bei Anforderung des SOLL-Kamerabildes in dem SOLL-Kamerasichtbereich die steuerbare Kamera erst motorisch verfahren werden muss. In Abhängigkeit der Aktorik der steuerbaren Kamera kann dieser Vorgang eine gewisse Zeitspanne in Anspruch nehmen, wobei während dieser Zeitspanne eines oder mehrere ZWISCHEN-Kamerabilder aufgenommen werden. Diese ZWISCHEN-Kamerabilder werden jedoch nicht verworfen, sondern von der Anzeigeeinrichtung auf dem Bildschirm dargestellt, jedoch wiederum nur die Teilabschnitte der ZWISCHEN-Kamerabilder, welche lagerichtig und größenrichtig in dem SOLL-Kamerasichtbereich angezeigt werden können. Bei dieser Weiterbildung erfolgt somit eine stetige Aktualisierung der Bilddarstellung auf dem Bildschirm, sodass stets aktuelle Kamerabilder dargestellt werden. Der SOLL-Kamerasichtbereich auf dem Bildschirm wird in den meisten Fällen ausgehend von dem IST-Kamerabild über eine oder mehrere ZWISCHEN-Kamerabilder stetig weiter gefüllt, und zwar stets mit aktuellen Kamerabildern, sodass dem Nutzer der Clientvorrichtung die maximal verfügbare Bildinformation zu dem ausgewählten SOLL-Kamerasichtbereich dargestellt wird.

Bei einer bevorzugten Ausführungsform der Erfindung ist die Auswahleinrichtung ausgebildet, die Auswahl des SOLL-Kamerasichtbereichs durch ein interaktives Verschieben eines ausgewählten Bildpunkts des IST-Kamerabilds umzusetzen. In einem ersten Schritt wird somit durch die Auswahleinrichtung ein Bildpunkt (oder ein Bildbereich mit dem Bildpunkt) des IST-Kamerabilds definiert. In einem zweiten Schritt wird der ausgewählte Bildpunkt des IST-Kamerabilds verschoben. Es ist dabei vorgesehen, dass die Auswahleinrichtung ausgebildet ist, dass das IST-Kamerabild gemeinsam mit dem ausgewählten Bildpunkt verschoben wird. Dadurch wird sichergestellt, dass das IST-Kamerabild zumindest abschnittsweise in dem SOLL-Kamerasichtbereich angezeigt wird. Das Auswählen und interaktive Verschieben des ausgewählten Bildpunkts kann beispielsweise durch Betätigung einer Computermaus oder durch Bedienung eines Touchscreens ausgeführt werden. Bei dem interaktiven Verschieben des ausgewählten Bildpunkts sowie des IST-Kamerabilds wird somit ein Übergang von der ersten Bilddarstellung zu der zweiten Bilddarstellung geschaffen. Es ist optional möglich, dass bereits während des Verschiebens das IST-Kamerabild durch ein nachfolgendes ZWISCHEN-Kamerabild oder sogar ein SOLL-Kamerabild ersetzt wird, die Ersetzung erfolgt jedoch so, dass das aktuell dargestellte Kamerabild stets lagerichtig und größenrichtig zu dem aktuellen SOLL-Kamerasichtbereich angeordnet ist und/oder, dass der ausgewählte Bildpunkt an der durch die Auswahleinrichtung ausgewählten Position angeordnet ist.

Bei einer Weiterbildung oder einer Alternative der Erfindung ist die Auswahleinrichtung ausgebildet, den SOLL-Kamerasichtbereich durch ein interaktives Verschieben von zwei ausgewählten Bildpunkten des IST-Kamerabilds auszuwählen. Hierbei wird das IST-Kamerabild in Abhängigkeit der Position der zwei ausgewählten Bildpunkte skaliert, um das IST-Kamerabild zumindest abschnittsweise in dem SOLL-Kamerasichtbereich anzuzeigen. Durch das sogenannte "Pinching" wird beispielsweise auf Smartphones ein Zoomen der Ansicht umgesetzt. Bei einem Zoomen erfolgt ebenfalls ein Übergang von einem IST-Kamerasichtbereich zu einem SOLL-Kamerasichtbereich, wobei dieser - soweit es sich um ein symmetrisches Zoomen handelt - ausschließlich durch eine Änderung des Sichtwinkels umgesetzt wird. Bei einem Zoomen, welches zugleich eine Verschiebung beinhaltet, wird sowohl der Sichtwinkel als auch die Ausrichtung der Kamera geändert, um ein entsprechendes SOLL-Kamerabild erzeugen zu können.

Auch bei dieser Änderung von dem IST-Kamerasichtbereich zu dem SOLL-Kamerasichtbereich ist es bevorzugt, dass die durch die Auswahleinrichtung ausgewählten Bildpunkte in dem SOLL-Kamerasichtbereich an den durch die Auswahleinrichtung ausgewählten Positionen angeordnet sind. Dadurch wird sichergestellt, dass der Benutzer die Clientvorrichtung stets in einfacher Weise interaktiv bedienen kann.

Bei einer bevorzugten Realisierung der Erfindung ist die Kommunikationseinrichtung ausgebildet, das IST-Kamerabild, das ZWISCHEN-Kamerabild und das SOLL-Kamerabild als Kamerabilder jeweils zusammen mit Metadaten zu empfangen, wobei die Metadaten eine Einordnung der Kamerabilder in ein gemeinsames Bezugssystem ermöglichen. Dieser Realisierung liegt die Überlegung zugrunde, dass durch Angabe der Metadaten und Verwendung eines gemeinsamen Bezugssystems sowohl die Auswahl des SOLL-Kamerasichtbereichs als auch das Einfügen der Kamerabilder in den SOLL-Kamerasichtbereich stark vereinfacht wird. Die Metadaten sind insbesondere als Lageangaben in dem Bezugssystem und/oder als Einstellparameter, insbesondere Schwenkwinkel, Neigungswinkel und Sichtwinkel der steuerbaren Kamera ausgebildet.

Bei einer möglichen Ausgestaltung der Erfindung ist das Bezugssystem als ein ebenes 2D-Bezugssystem ausgebildet. Als Metadaten können beispielsweise zwei gegenüberliegende Eck-Koordinaten der Kamerabilder in dem 2D-Bezugssystem übermittelt werden. In dieser Ausgestaltung werden somit alle möglichen Kamerasichtbereiche auf eine zweidimensionale Fläche projiziert und die jeweils aktuellen Kamerabilder mit den entsprechenden Koordinaten versehen.

Bei einer bevorzugten Ausgestaltung der Erfindung wird jedoch ein 3D-Bezugssystem oder ein Polarkoordinatensystem verwendet, wobei die Metadaten die IST-Pan, -Tilt und -Zoomwerte der Kamera oder dazu äquivalente Werte bzw. Definitionen umfassen. Insbesondere kann ein sphärisches Koordinatensystem eingesetzt werden, welches auf die Winkelangaben begrenzt ist.

Ein weiterer Gegenstand der Erfindung betrifft ein Verfahren zum Anzeigen von Kamerabildern einer steuerbaren Kamera auf einem Bildschirm mit den Merkmalen des Anspruchs 11, wobei in einer ersten Bilddarstellung ein IST-Kamerabild in einem IST-Kamerasichtbereich auf dem Bildschirm dargestellt wird, nachfolgend ein SOLL-Kamerasichtbereich ausgewählt wird und nachfolgend in einer zweiten Bilddarstellung das IST-Kamerabild zumindest abschnittsweise und in einer weiteren Bilddarstellung das SOLL-Kamerabild des SOLL-Kamerasichtbereichs lagerichtig und größenrichtig in dem SOLL-Kamerasichtbereich angezeigt wird.

Ein weiterer Gegenstand der Erfindung betrifft ein Computerprogramm mit Programmcodemitteln mit den Merkmalen des Anspruchs 12.

Ein weiterer Gegenstand der Erfindung betrifft ein Überwachungssystem, welches eine Clientvorrichtung aufweist, wie diese zuvor beschrieben wurde, beziehungsweise nach einem der vorhergehenden Ansprüche. Ferner umfasst das Überwachungssystem mindestens eine steuerbare Kamera wie diese zuvor beschrieben wurde.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 ein schematisches Blockdiagramm eines Überwachungssystems mit einer Clienteinrichtung als ein Ausführungsbeispiel der Erfindung;
Figur 2 das Überwachungssystem in der Figur 1 in einer gegenständlichen Form;
Figur 3 eine erste schematische Darstellung zur Illustration der Funktionsweise der Clienteinrichtung der vorhergehenden Figuren;
Figur 4 ein Bezugssystem zur weiteren Illustration der Funktionsweise;
Figur 5 eine Abfolge von Bilddarstellungen, welche den Stand der Technik repräsentieren;
Figur 6 in gleicher Darstellung wie in der Figur 5 eine Abfolge von Bilddarstellungen mit dem Überwachungssystem bzw. der Clientvorrichtung der vorhergehenden Figuren;
Figur 7 eine Illustration zur Funktionsweise des Überwachungssystems bzw. der Clienteinrichtung bei einem Zoom-Vorgang;
Figur 8 das Bezugssystem in der Figur 4 zur Illustration der Funktionsweise des Zoomens;

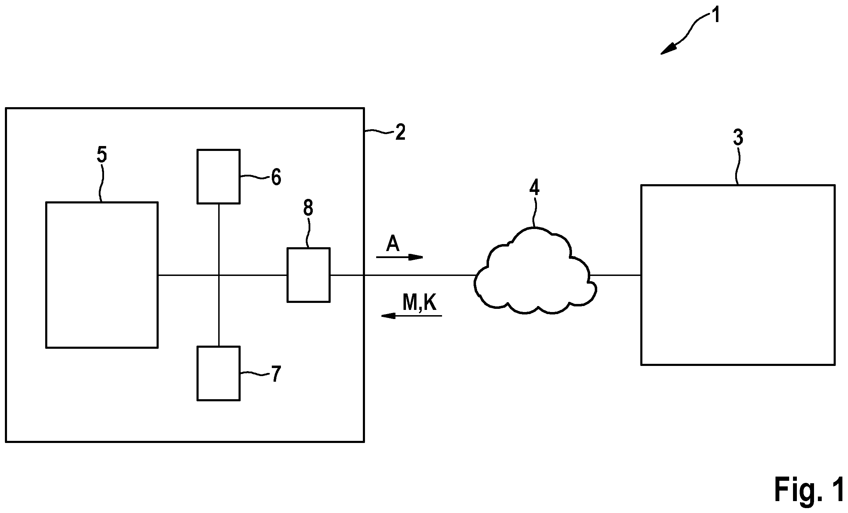

Die Figur 1 zeigt in einem schematischen Blockdiagramm ein Überwachungssystem 1, welches zur Überwachung eines beliebigen Überwachungsbereichs ausgebildet sein kann. Es kann sich auch um die Überwachung einer Konferenz etc. handeln. Besonders bevorzugt dient das Überwachungssystem 1 jedoch zur Überwachung von Überwachungsbereichen gegen ein unbefugtes Eindringen, Diebstahl, insbesondere Ladendiebstahl etc.

Das Überwachungssystem 1 umfasst eine oder mehrere Clienteinrichtungen 2 und eine oder mehrere PTZ-Kameras (Pan-Tilt-Zoom-Kameras) 3 als steuerbare Kameras. Die PTZ-Kamera 3 ist mit der Clienteinrichtung 2 über ein Netzwerk 4 verbunden. Bei dem Netzwerk 4 kann es sich um ein kabelgebundenes Netzwerk, wie z.B. ein LAN handeln. Es ist jedoch auch möglich, dass das Netzwerk 4 als ein öffentliches Netzwerk, insbesondere ein Internet, ausgebildet ist.

Die PTZ-Kamera 3 weist eine Aktorik auf, welche es ermöglicht, die PTZ-Kamera 3 um eine Achse senkrecht zu einer Montage-, Grund- oder Referenzfläche der PTZ-Kamera 3 zu schwenken (Pan) und um eine zu der genannten Fläche parallelen Achse, welche senkrecht zu einer Blickrichtung der PTZ-Kamera 3 ausgerichtet ist, zu neigen (Tilt). Zudem weist die PTZ-Kamera 3 einen motorisch betriebenen Zoom auf. Bei anderen Ausführungsbeispielen kann statt der PTZ-Kamera 3 auch eine PT-Kamera, also ohne Zoom-Funktionalität, oder eine Überwachungskamera mit elektronischem Zoom vorgesehen sein.

Die Clienteinrichtung 2 kann als ein Personalcomputer ausgebildet sein, bevorzugt ist diese jedoch als ein mobiles Endgerät, insbesondere als ein Smartphone oder Tablet-PC ausgebildet. Besonders bevorzugt ist die Verbindung von der Clienteinrichtung 2 zu dem Netzwerk 4 kabellos realisiert.

Die Clienteinrichtung 2 weist einen Bildschirm 5 zur Darstellung von Kamerabildern der PTZ-Kamera 3 auf. Der Bildschirm 5 wird durch eine Anzeigeeinrichtung 6 angesteuert, wobei die Anzeigeeinrichtung 6 zugleich die Steuerungseinrichtung der Clienteinrichtung 2 darstellen kann. Ferner umfasst die Clienteinrichtung 2 eine Auswahleinrichtung 7, die eine Mensch-Maschine-Schnittstelle zu der Clienteinrichtung 2 bildet und beispielsweise als ein berührungsempfindliches Feld auf dem Bildschirm 5 ausgebildet ist, sodass dies als ein Touchscreen realisiert ist. Ferner weist die Clienteinrichtung 2 eine Kommunikationseinrichtung 8 auf, welche ausgebildet ist, über das Netzwerk 4 mit der PTZ-Kamera 3 zu kommunizieren, wie dies nachfolgend noch dargestellt wird.

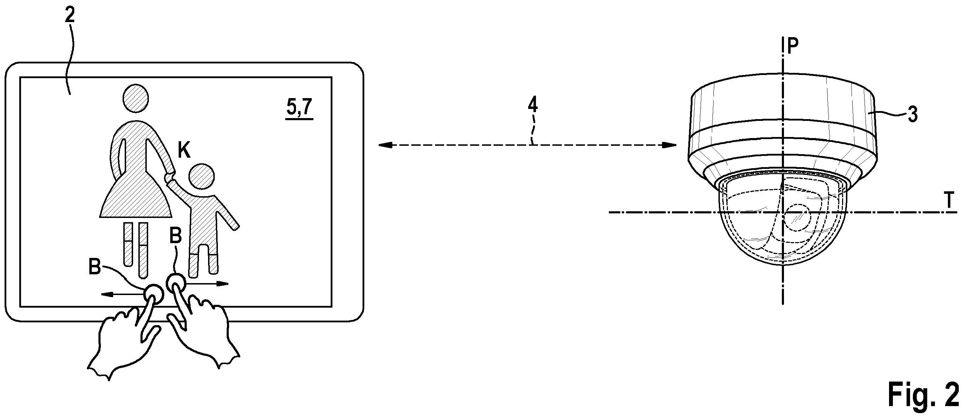

In der Figur 2 ist das Überwachungssystem 1 nochmals gegenständlich dargestellt, wobei zu erkennen ist, dass die PTZ-Kamera 3 um eine in der Darstellung horizontal verlaufenden Neigungsachse T und eine vertikal verlaufende Schwenkachse P bewegbar ist. Die PTZ-Kamera 3 kann auch in anderen Positionen montiert werden, sodass dann die Neigungsachse T parallel zu einer Montageebene und die Schwenksachse P senkrecht zu der Montageebene ist.

Die Clienteinrichtung 2 ist als ein Smartphone ausgebildet, wobei auf dem Bildschirm 5 ein Kamerabild K der PTZ-Kamera 3 dargestellt ist. Grafisch angedeutet ist die Bedienung der Auswahleinrichtung 7, welche - wie bereits erläutert - mit dem Bildschirm 5 gemeinsam als ein Touchscreen ausgebildet ist, wobei durch zwei Finger zwei unterschiedliche Bildpunkte B ausgewählt und auf dem Bildschirm 5 verschoben werden, um eine Benutzereingabe zu tätigen.

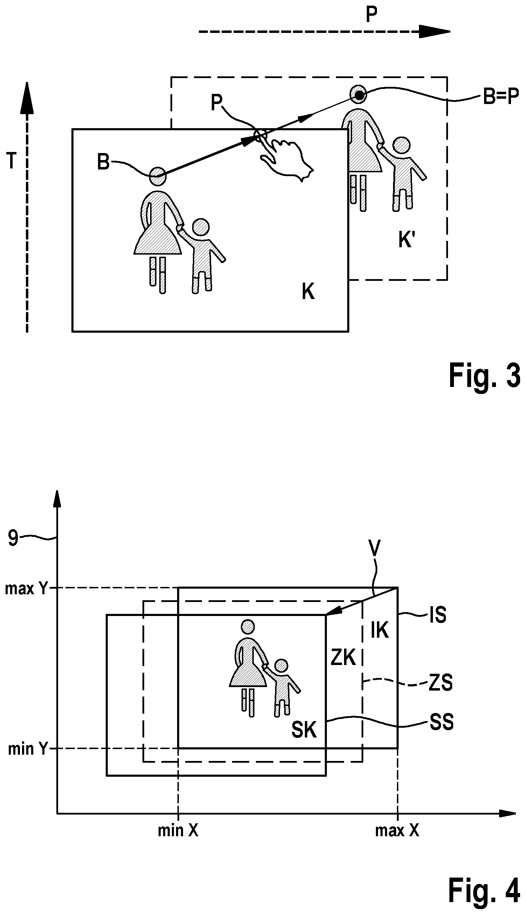

Anhand der Figur 3 soll die Funktionsweise des Überwachungssystems 1 erläutert werden. Das Überwachungssystem 1, insbesondere die Clienteinrichtung 2, ist ausgebildet, durch Benutzereingabe in der Auswahleinrichtung 7 die PTZ-Kamera 3 zu steuern, um bedienerfreundlich und komfortabel das Kamerabild K auf dem Bildschirm 5 zu ändern. Die interaktive Steuerung der PTZ-Kamera 3 hinsichtlich der Schwenkachse P und der Neigungsachse T erfolgt, indem ein Bildpunkt B auf dem Kamerabild K ausgewählt wird und mittels einer Schiebebewegung auf der als Touchscreen ausgebildeten Auswahleinrichtung 7 an eine Position P verschoben wird. Die PTZ-Kamera 3 wird nachfolgend so ausgerichtet, dass in einem nachfolgenden Kamerabild K' der Bildpunkt B an der ausgewählten Position P liegt, wie dies in dem Kamerabild K' dargestellt ist.

Mithilfe der Figur 4 werden die im Hintergrund ablaufenden Vorgänge bei diesem Steuervorgang näher beleuchtet. Das Bild 4 zeigt ein als ein Koordinatensystem ausgebildetes Bezugssystem 9, in dem alle von der PTZ-Kamera 3 erfassbaren Bildpunkte darstellbar sind. Das Bezugssystem 9 ist in der Figur 4 als ein 2D-Bezugssystem ausgebildet, wobei die von der PTZ-Kamera 3 erfassbaren Bildpunkte auf eine 2D-Fläche projiziert sind.

In dem Bezugssystem 9 ist ein IST-Kamerasichtbereich IS dargestellt, welcher in dem Bezugssystem 9 beispielsweise durch Angabe von zwei Eckpunkten und somit den Koordinaten (min X; min Y); (max X; max Y) definiert ist. Physikalisch betrachtet ist der IST-Kamerasichtbereich IS durch die Angabe des Schwenkwinkels p um die Schwenkachse P, Neigungswinkels t um die Neigungsachse T und einem Zoomfaktor Z sowie den intrinsischen Kameraparametern wie Brennweite der PTZ-Kamera 3 etc. definiert.

Statt einem kartesischen Koordinatensystem kann auch ein Kugelkoordinatensystem oder ein 3D-Bezugssystem las das Bezugssystem 9 gewählt werden, wobei das Bezugssystem 9 beispielsweise eine Hemisphäre ausbildet, wobei die Eckpunkte der Kamerasichtbereiche IS, ZS, SS durch Winkelkoordinaten, insbesondere durch Angabe des Schwenkwinkels p und des Neigungswinkels t definiert sind. Die Wahl des Bezugssystems 9 als 3D-Bezugssystem ist mathematisch aufwendiger, jedoch können auch Änderungen aufgrund des Sichtwinkels durch Projektion der Kamerabilder K in das Bezugssystem ) realitätsnäher dargestellt werden.

Bei einer Interaktion wie in der Figur 3 dargestellt wird mit Sicht auf das Bezugssystem 9 der IST-Kamerasichtbereich IS um einen Verschiebungsvektor V zu einem SOLL-Kamerasichtbereich SS verschoben. Der Verschiebungsvektor V ist identisch, jedoch gegengerichtet zu dem Vektor zwischen dem Bildpunkt B und der gewünschten Position P. Der SOLL-Kamerasichtbereich hat in dem Bezugssystem 9 andere Eckkoordinaten und ist auch anderen Kameraparametern zugeordnet, sodass insbesondere der Schwenkwinkel p und der Neigungswinkel t der PTZ-Kamera 3 anders ausgebildet sind.

In dem IST-Kamerasichtbereich IS ist ein IST-Kamerabild IK dargestellt. Nach dem Schwenken und der Neigung der PTZ-Kamera 3 sowie der Übertragung eines aktuellen Bildes ist in dem Soll-Kamerasichtbereich SS ein SOLL-Kamerabild SK dargestellt.

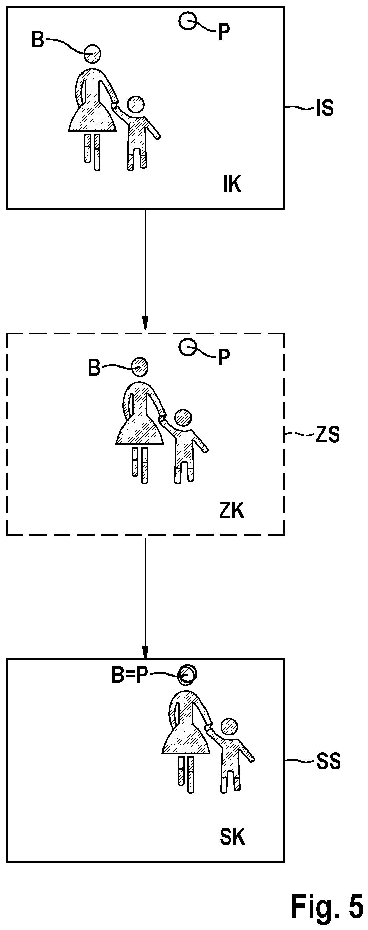

Realistisch betrachtet benötigt die PTZ-Kamera 3 jedoch eine gewisse Zeit, um den Schwenkwinkel p, den Neigungswinkel t sowie gegebenenfalls den Zoomfaktor Z neu einzustellen. Aus diesem Grund ist es wahrscheinlich, dass in der Zwischenzeit ZWISCHEN-Kamerabilder ZK übertragen werden, welche in einem ZWISCHEN-Kamerasichtbereich ZS in dem Bezugssystem 9 angeordnet sind. Würden nun die drei genannten Kamerabilder IST-Kamerabild IK, ZWISCHEN-Kamerabild ZK und SOLL-Kamerabild SK nacheinander auf dem Bildschirm 5 dargestellt, so ergäbe sich eine Darstellung, wie diese in der Figur 5 gezeigt ist: Wenn der Benutzer den Bildpunkt B auf die Position P verschoben hat, so erfolgt zunächst in dem IST-Kamerabild IK keine Änderung. Bei einem nächsten Kamerabild ist die PTZ-Kamera 3 bereits nachgezogen, sodass sich das Zwischenkamerabild ZK ergibt, wobei der Bildpunkt B und die Position P einen kleineren Abstand als in dem IST-Kamerabild IK aufweisen, jedoch noch nicht deckungsgleich sind. Erst in dem SOLL-Kamerabild SK sind der Bildpunkt B und die Position P deckungsgleich. Diese Darstellung fühlt sich für einen Bediener der Clienteinrichtung 2 aufgrund der Latenz, bis der Bildpunkt B auf die gewünschte Position P nachgezogen wird, "zäh" an.

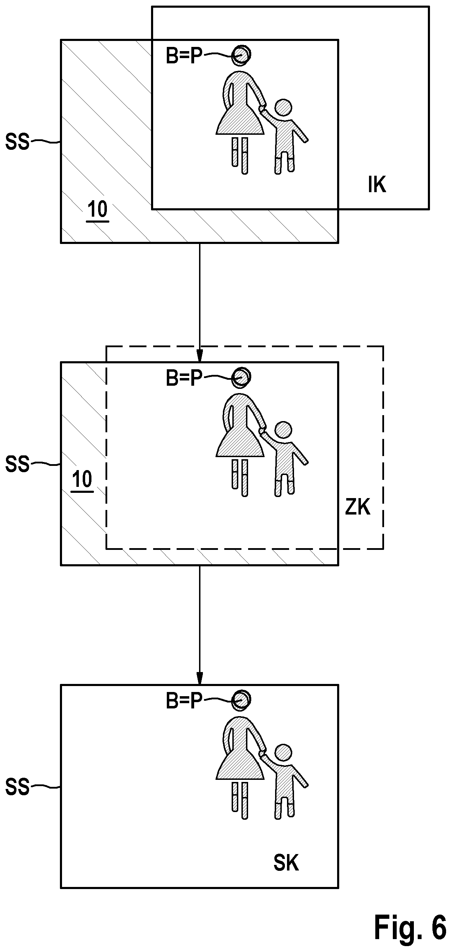

Um diese Latenz zu umgehen, wird das Ist-Kamerabild IK und gegebenenfalls das Zwischenkamerabild ZK lagerichtig und größenrichtig in dem Soll-Kamerasichtbereich SS eingepasst. Dieses Verhalten ist in der Figur 6 grafisch dargestellt. Durch das Einpassen des IST-Kamerabilds in den SOLL-Kamerasichtbereich SS sind der Bildpunkt B und die gewünschte Position P sofort deckungsgleich (B=P), dies wird insbesondere dadurch erreicht, dass das IST-Kamerabild mit dem Bildpunkt B mitgezogen wird. Diese Verschiebung (und ggf. Skalierung) des IST-Kamerabildes IK kann durch die Clienteinrichtung 2 autark durchgeführt und somit ohne Verzögerung umgesetzt werden.

Allerdings kann nicht der gesamte SOLL-Kamerasichtbereich SS sofort ausgefüllt werden, sondern es verbleiben bildpunktfreie Bereiche 10, für die das IST-Kamerabild IK keine Bildinformationen hat. Auch das nachfolgende ZWISCHEN-Kamerabild ZK wird lagerichtig und größenrichtig in den SOLL-Kamerasichtbereich SS eingefügt, sodass der bildpunktfreie Bereich 10 verringert wird. Sobald die PTZ-Kamera 3 die durch den SOLL-Kamerasichtbereich SS definierten Kameraparameter Schwenkwinkel p, Neigungswinkel t und Zoomfaktor Z erreicht hat, wird der SOLL-Kamerasichtbereich SS durch das SOLL-Kamerabild SK vollständig ausgefüllt.

Es ist zu unterstreichen, dass auf dem Bildschirm 5 stets der SOLL-Kamerasichtbereich SS gezeigt wird. Somit scheint die Clienteinrichtung 2 bei einer Benutzermanipulation über die Auswahleinrichtung 7 unverzögert oder nahezu unverzögert zu reagieren, wobei jedoch aktuelle Bildinformationen für Bereiche in dem SOLL-Kamerasichtbereich SS, die nicht deckungsgleich sind mit dem IST-Kamerasichtbereich IS, sukzessive nachgeladen werden.

Betrachtet man wieder die Figur 1, so ist zu erkennen, dass bei der Auswahl eines Soll-Kamerasichtbereichs Anforderungsdaten A an die PTZ-Kamera 3 übertragen werden. Bei den Anforderungsdaten A kann es sich insbesondere um die Koordinaten des Soll-Kamerasichtbereichs SS, den Vektor zwischen dem Bildpunkt B und der Position P oder sogar um die Angabe des gewünschten Schwenkwinkels p, Neigungswinkels t und Zoomfaktors Z handeln. Die PTZ-Kamera 3 liefert die Kamerabilder, insbesondere das IST-Kamerabild IK, das ZWISCHEN-Kamerabild ZK und das SOLL-Kamerabild SK, wobei jedoch zu jedem Kamerabild K Metadaten M mitgesendet werden, die eine Identifizierung der Position der Kamerabilder K in dem Bezugssystem 9 ermöglichen, sodass die Kamerabilder K in dem SOLL-Kamerasichtbereich SS lagerichtig und größenrichtig eingesetzt werden können.

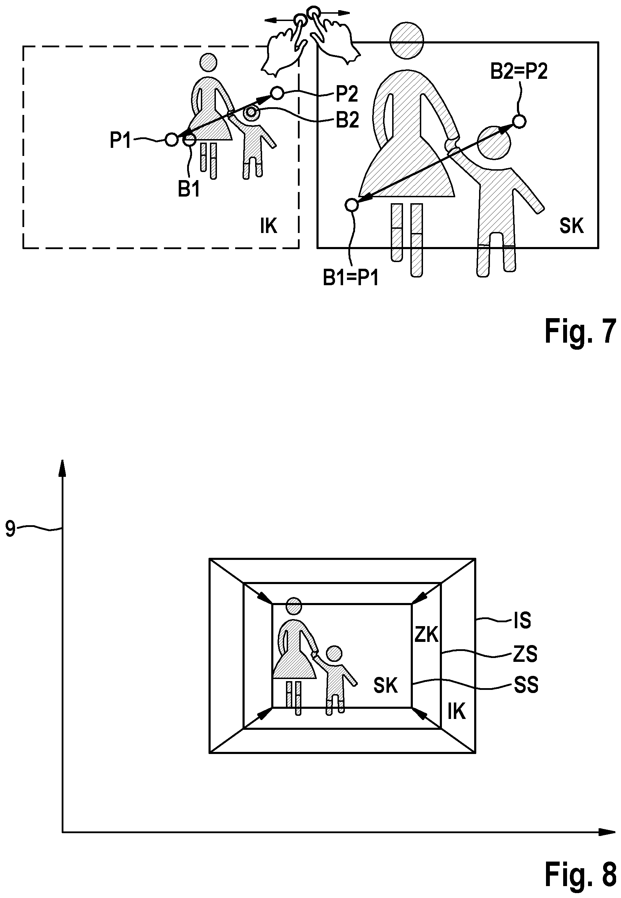

Die Figur 7 zeigt schematisch die Funktionsweise der Clienteinrichtung 2 bei einem Zoomen mittels Auseinanderziehen von zwei Bildpunkten B1,B2 auf dem IST-Kamerabild IK auf die Positionen P1, P2 ("pinching"). Durch das Auseinanderziehen der Bildpunkte B1 und B2 auf die Positionen P1 und P2 wird ein Zoomfaktor oder Vergrößerungsfaktor Z bestimmt.

Betrachtet man in der Figur 8 wieder das Bezugssystem 9, so stellt ein Vergrößern eines Bildausschnitts eine Verkleinerung des SOLL-Kamerasichtbereichs SS gegenüber dem IST-Kamerasichtbereich IS dar, wobei der ZWISCHEN-Kamerasichtbereich ZS wieder eine Zwischengröße einnimmt. Bei einem Zoomen als Benutzerinteraktion wird das IST-Kamerabild wieder lagerichtig und größenrichtig in dem SOLL-Kamerasichtbereich SS eingepasst, sodass auch bei einem Zoomen eine unverzögerte Reaktion der Clienteinrichtung 2 erfolgt.

Das Verhalten der Clienteinrichtung 2 ist insbesondere dadurch gekennzeichnet, dass ein ausgewählter Bildpunkt B,B1,B2 stets unter dem "Finger" des Benutzers bleibt, da dieser aufgrund des Einpassens des Ist-Kamerabilds IK in den Soll-Kamerasichtbereich SS stets deckungsgleich mit der gewünschten Position P bleibt.

## Patentansprüche

1. Clientvorrichtung (2) zur Darstellung von Kamerabildern (IK, ZK, SK) einer
steuerbaren Kamera (3)
mit einem Bildschirm (5),
mit einer Anzeigeeinrichtung (6) zur Anzeige einer ersten Bilddarstellung auf dem Bildschirm (5), wobei die erste Bilddarstellung ein IST-Kamerabild (IK)
in einem IST-Kamerasichtbereich (IS) der Kamera (3) zeigt,
mit einer Auswahleinrichtung (7), wobei die Auswahleinrichtung (7) zur Auswahl eines SOLL-Kamerasichtbereichs (SS) der Kamera (3) ausgebildet ist,
mit einer Kommunikationseinrichtung (8), wobei die Kommunikationseinrichtung (8) zur Anforderung (A) und zum Empfang eines SOLL-Kamerabilds (SK) in dem SOLL-Kamerasichtbereich (SS) ausgebildet ist, wobei die Kommunikationseinrichtung (8) ausgebildet ist, das IST-Kamerabild (IK) und/oder das SOLL-Kamerabild (SK) als Kamerabilder (K) jeweils zusammen mit Metadaten (M) zu empfangen,
**dadurch gekennzeichnet, dass**
die Clientvorrichtung (2) dazu ausgebildet ist, nach oder bei der Auswahl des SOLL-Kamerasichtbereichs (SS) ihren Bildschirm (5) in eine zweite oder weitere Bilddarstellung zu schalten,
die Anzeigeeinrichtung (5) ausgebildet ist, in einer zweiten Bilddarstellung das IST-Kamerabild (IK) zumindest abschnittsweise lagerichtig und größenrichtig in dem SOLL-Kamerasichtbereich (SS) und in einer weiteren Bilddarstellung das SOLL-Kamerabild (SK) lagerichtig und größenrichtig in dem SOLL-Kamerasichtbereich (SS) anzuzeigen.

2. Clientvorrichtung (2) nach Anspruch 1, **dadurch gekennzeichnet, dass** die Anzeigeeinrichtung (5) ausgebildet ist, bei mindestens einer, der weiteren Bilddarstellung vorgeschalteten Zwischenbilddarstellung, ein ZWISCHEN-Kamerabild (ZK) in einem ZWISCHEN-Kamerasichtbereich (ZS) in dem SOLL-Kamerasichtbereich (SS) lagerichtig und größenrichtig anzuzeigen.

3. Clientvorrichtung (2) nach einem der vorhergehenden Ansprüche, **dadurch gekennzeichnet, dass** die Auswahleinrichtung (7) ausgebildet ist, die Auswahl des SOLL-Kamerasichtbereichs (SS) durch ein interaktives Verschieben eines ausgewählten Bildpunkts (B) des IST-Kamerabilds (IK) umzusetzen, wobei das IST-Kamerabild (IK) gemeinsam mit dem ausgewählten Bildpunkt (B) verschoben wird, um das IST-Kamerabild (IK) zumindest abschnittsweise in dem SOLL-Kamerasichtbereich (SS) anzuzeigen.

4. Clientvorrichtung (2) nach einem der vorhergehenden Ansprüche, **dadurch gekennzeichnet, dass** die Auswahleinrichtung (7) ausgebildet ist, den SOLL-Kamerasichtbereich (SK) durch ein interaktives Verschieben von zwei ausgewählten Bildpunkten (B1, B2) des IST-Kamerabilds (IK) umzusetzen, wobei das IST-Kamerabild (IK) in Abhängigkeit der Position (P1, P2) der zwei ausgewählten Bildpunkte (B1,B2) skaliert wird, um das IST-Kamerabild (IK) zumindest abschnittsweise in dem SOLL-Kamerasichtbereich (SS) anzuzeigen.

5. Clientvorrichtung (2) nach Anspruch 3 oder 4, **dadurch gekennzeichnet, dass** der oder die ausgewählten Bildpunkte (B, B1, B2) des IST-Kamerabilds (IK) in dem SOLL-Kamerasichtbereich (IS) an der durch die Auswahleinrichtung (7) ausgewählten Position (P, P1, P2) angeordnet sind.

6. Clientvorrichtung (2) nach einem der vorhergehenden Ansprüche, **dadurch gekennzeichnet, dass** die Auswahleinrichtung (7) als ein Touchscreen ausgebildet ist.

7. Clientvorrichtung (2) nach einem der vorhergehenden Ansprüche, **dadurch gekennzeichnet, dass** die Kommunikationseinrichtung (8) ausgebildet ist, das IST-Kamerabild (IK), das ZWISCHEN-Kamerabild (ZK) und/oder das SOLL-Kamerabild (SK) als Kamerabilder (K) jeweils zusammen mit Metadaten (M) zu empfangen, wobei die Metadaten (M) eine Einordnung der Kamerabilder (K) in ein gemeinsames Bezugssystem (9) ermöglichen.

8. Clientvorrichtung (2) nach Anspruch 7, **dadurch gekennzeichnet, dass** die Metadaten (M) als Verweise zu der zugeordneten Kamerasichtauswahl (IS, ZS, SS) oder als Lageangaben in dem Bezugssystem (9) ausgebildet sind.

9. Clientvorrichtung (2) nach Anspruch 7 oder 8, **dadurch gekennzeichnet, dass** das Bezugssystem (9) als ein 2D-Bezugssystem ausgebildet ist.

10. Clientvorrichtung (2) nach Anspruch 7 oder 8, **dadurch gekennzeichnet, dass** das Bezugssystem als ein 3D-Bezugssystem (9) oder sphärisches Koordinatensystem ausgebildet ist.

11. Verfahren zum Anzeigen von Kamerabildern auf einem Bildschirm (5) mit einer Clienteinrichtung (2) nach einem der vorhergehenden Ansprüche, wobei in einer ersten Bilddarstellung ein IST-Kamerabild (IK) in einem IST-Kamerasichtbereich (IS) auf dem Bildschirm (5) dargestellt wird, wobei nachfolgend ein SOLL-Kamerasichtbereich (SS) ausgewählt wird, wobei die Clienteinrichtung (2) ausgebildet ist, nach Auswahl des SOLL-Kamerabereichs (SS) ihren Bildschirm (5) in eine zweite oder weitere Bilddarstellung zu schalten und wobei nachfolgend in einer zweiten Bilddarstellung das IST-Kamerabild (IK) zumindest abschnittsweise und in einer weiteren Bilddarstellung ein SOLL-Kamerabild (SK) des SOLL-Kamerasichtbereichs (SS) lagerichtig und größenrichtig in dem SOLL Kamerasichtbereichs (SS) angezeigt wird.

12. Computerprogramm mit Programmcode-Mitteln, um alle Schritte des Verfahrens nach Anspruch 11 durchzuführen, wenn das Programm auf einem Computer und/oder der Clientvorrichtung (2) von jedem Beliebigen der Ansprüche 1 bis 10 ausgeführt wird.

13. Überwachungssystem (1) mit der Clientvorrichtung (2) nach einem der vorhergehenden Ansprüche 1 bis 10, **gekennzeichnet durch** die steuerbare Kamera (3).

14. Überwachungssystem (1) nach Anspruch 13, **dadurch gekennzeichnet, dass** der Übergang von dem IST-Kamerasichtbereich (IS) zu dem SOLL-Kamerasichtbereich (SS) durch eine Änderung einer Ausrichtung der Kamera (3) und/oder durch Änderung einer Zoomeinstellung (Z) der Kamera (3) erfolgt.

## Claims

1. Client apparatus (2) for representing camera images (IK, ZK, SK) of a controllable camera (3)
having a screen (5),
having a display device (6) for displaying a first image representation on the screen (5), wherein the first image representation shows an ACTUAL camera image (IK) in an ACTUAL camera viewing region (IS) of the camera (3),
having a selection device (7), wherein the selection device (7) is configured for selecting a DESIRED camera viewing region (SS) of the camera (3),
having a communication device (8), wherein the communication device (8) is configured for requesting (A) and for receiving a DESIRED camera image (SK) in the DESIRED camera viewing region (SS), wherein the communication device (8) is configured to receive the ACTUAL camera image (IK) and/or the DESIRED camera image (SK) as camera images (K) in each case together with metadata (M),
**characterized in that** the client apparatus (2) is configured to switch its screen (5) into a second or further image representation after or upon the selection of the DESIRED camera viewing region (SS), the display device (5) is configured to display in a second image representation the ACTUAL camera image (IK) at least in a section-wise fashion with the correct orientation and the correct size in the DESIRED camera viewing region (SS) and to display in a further image representation the DESIRED camera image (SK) with the correct orientation and the correct size in the DESIRED camera viewing region (SS).

2. Client apparatus (2) according to Claim 1, **characterized in that** the display device (5) is configured to display in at least one intermediate image representation, before the further image representation, an INTERMEDIATE camera image (ZK) in an INTERMEDIATE camera viewing region (ZS) in the DESIRED camera viewing region (SS) with the correct orientation and the correct size.

3. Client apparatus (2) according to one of the preceding claims, **characterized in that** the selection device (7) is configured to realize the selection of the DESIRED camera viewing region (SS) by way of an interactive displacement of a selected image point (B) of the ACTUAL camera image (IK), wherein the ACTUAL camera image (IK) is displaced together with the selected image point (B) in order to display the ACTUAL camera image (IK) at least in a section-wise manner in the DESIRED camera viewing region (SS).

4. Client apparatus (2) according to one of the preceding claims, **characterized in that** the selection device (7) is configured to realize the DESIRED camera viewing region (SK) by way of an interactive displacement of two selected image points (B1, B2) of the ACTUAL camera image (IK), wherein the ACTUAL camera image (IK) is scaled in dependence on the position (P1, P2) of the two selected image points (B1, B2) in order to display the ACTUAL camera image (IK) at least in a section-wise manner in the DESIRED camera viewing region (SS).

5. Client apparatus (2) according to Claim 3 or 4, **characterized in that** the selected image point or image points (B, B1, B2) of the ACTUAL camera image (IK) in the DESIRED camera viewing region (IS) are arranged at the position (P, P1, P2) that is selected by way of the selection device (7).

6. Client apparatus (2) according to one of the preceding claims, **characterized in that** the selection device (7) is configured as a touchscreen.

7. Client apparatus (2) according to one of the preceding claims, **characterized in that** the communication device (8) is configured to receive the ACTUAL camera image (IK), the INTERMEDIATE camera image (ZK) and/or the DESIRED camera image (SK) as camera images (K) in each case together with metadata (M), wherein the metadata (M) permits placement of the camera images (K) in a common reference system (9).

8. Client apparatus (2) according to Claim 7, **characterized in that** the metadata (M) are configured as indications relating to the associated camera view selection (IS, ZS, SS) or as orientation information in the reference system (9).

9. Client apparatus (2) according to Claim 7 or 8, **characterized in that** the reference system (9) is configured as a 2D reference system.

10. Client apparatus (2) according to Claim 7 or 8, **characterized in that** the reference system is configured as a 3D reference system (9) or a spherical coordinate system.

11. Method for displaying camera images on a screen (5) having a client device (2) according to one of the preceding claims, wherein in a first image representation, an ACTUAL camera image (IK) in an ACTUAL camera viewing region (IS) is represented on the screen (5), wherein subsequently a DESIRED camera viewing region (SS) is selected, wherein the client device (2) is configured to switch, after selection of the DESIRED camera region (SS), its screen (5) to a second or further image representation, and wherein subsequently in a second image representation the ACTUAL camera image (IK) is displayed at least in a section-wise manner and in a further image representation a DESIRED camera image (SK) of the DESIRED camera viewing region (SS) is displayed with the correct orientation and the correct size in the DESIRED camera viewing region (SS).

12. Computer program having program code means for performing all the steps of the method according to Claim 11, if the program is executed on a computer and/or the client apparatus (2) according to any of Claims 1 to 10.

13. Monitoring system (1) having the client apparatus (2) according to one of the preceding claims 1 to 10, **characterized by** the controllable camera (3).

14. Monitoring system (1) according to Claim 13, **characterized in that** the transition from the ACTUAL camera viewing region (IS) to the DESIRED camera viewing region (SS) is effected by a change in an alignment of the camera (3) and/or a change of a zoom setting (Z) of the camera (3).

## Revendications

1. Dispositif client (2) pour la représentation d'images de caméra (IK, ZK, SK) d'une caméra pouvant être commandée (3), comportant
un écran (5),
un dispositif d'affichage (6) pour afficher une première représentation d'image sur l'écran (5), dans lequel la première représentation d'image affiche une image de caméra RÉELLE (IK) dans un champ de vision de caméra RÉEL (IS) de la caméra (3),
un dispositif de sélection (7), dans lequel le dispositif de sélection (7) est réalisé de manière à sélectionner un champ de vision de caméra THÉORIQUE (SS) de la caméra (3),
un dispositif de communication (8), dans lequel le dispositif de communication (8) est réalisé de manière à demander (A) et à recevoir une image de caméra THÉORIQUE (SK) dans le champ de vision de caméra THÉORIQUE (SS), dans lequel le dispositif de communication (8) est réalisé de manière à recevoir respectivement l'image de caméra RÉELLE (IK) et/ou l'image de caméra THÉORIQUE (SK) en tant qu'images de caméra (K) en association avec des métadonnées (M), **caractérisé en ce que** le dispositif client (2) est réalisé de manière à ce que, après ou lors de la sélection du champ de vision de caméra THÉORIQUE (SS), son écran (5) soit amené à basculer sur une deuxième représentation ou sur une autre représentation d'image, le dispositif d'affichage (5) est réalisé de manière à afficher, dans une deuxième représentation d'image, l'image de caméra RÉELLE (IK) au moins par sections à une position correcte et avec une taille correcte dans le champ de vision de caméra THÉORIQUE (SS) et, dans une autre représentation d'image, l'image de caméra THÉORIQUE (SK) à une position correcte et avec une taille correcte dans le champ de vision de caméra THÉORIQUE (SS).

2. Dispositif client (2) selon la revendication 1, **caractérisé en ce que** le dispositif d'affichage (5) est réalisé de manière à afficher, dans au moins une représentation d'image intermédiaire située avant l'autre représentation d'image, une image de caméra INTERMÉDIAIRE (ZK) dans un champ de vision de caméra INTERMÉDIAIRE (ZS) à une position correcte et avec une taille correcte dans le champ de vision de caméra THÉORIQUE (SS).

3. Dispositif client (2) selon l'une quelconque des revendications précédentes, **caractérisé en ce que** le dispositif de sélection (7) est réalisé de manière à transformer la sélection du champ de vision de caméra THÉORIQUE (SS) par un déplacement interactif d'un pixel sélectionné (B) de l'image de caméra RÉELLE (IK), dans lequel l'image de caméra RÉELLE (IK) est décalée en association avec le pixel sélectionné (B), de manière à afficher l'image de caméra RÉELLE (IK) au moins par sections dans le champ de vision de caméra THÉORIQUE (SS).

4. Dispositif client (2) selon l'une quelconque des revendications précédentes, **caractérisé en ce que** le dispositif de sélection (7) est réalisé de manière à transformer le champ de vision de caméra THÉORIQUE (SK) par un déplacement interactif de deux pixels sélectionnés (B1, B2) de l'image de caméra RÉELLE (IK), dans lequel l'image de caméra RÉELLE (IK) est mise à l'échelle en fonction de la position (P1, P2) de deux pixels sélectionnés (B1, B2), de manière à afficher l'image de caméra RÉELLE (IK) au moins par sections dans le champ de vision de caméra THÉORIQUE (SS).

5. Dispositif client (2) selon la revendication 3 ou 4, **caractérisé en ce que** le(s) pixel(s) sélectionné(s) (B, B1, B2) de l'image de caméra RÉELLE (IK) est/sont disposé (s) dans le champ de vision de caméra THÉORIQUE (IS) à la position (P, P1, P2) sélectionnée par le dispositif de sélection (7).

6. Dispositif client (2) selon l'une quelconque des revendications précédentes, **caractérisé en ce que** le dispositif de sélection (7) est réalisé sous la forme d'un écran tactile.

7. Dispositif client (2) selon l'une quelconque des revendications précédentes, **caractérisé en ce que** le dispositif de communication (8) est réalisé de manière à recevoir respectivement l'image de caméra RÉELLE (IK), l'image de caméra INTERMÉDIAIRE (ZK) et/ou l'image de caméra THÉORIQUE (SK) sous la forme d'images de caméra (K) en association avec des métadonnées (M), dans lequel les métadonnées (M) permettent un classement des images de caméra (K) dans un référentiel commun (9) .

8. Dispositif client (2) selon la revendication 7, **caractérisé en ce que** les métadonnées (M) sont réalisées sous la forme de références à la sélection associée de la vue de caméra (IS, ZS, SS) ou sous la forme d'indications de position dans le référentiel (9) .

9. Dispositif client (2) selon la revendication 7 ou 8, **caractérisé en ce que** le référentiel (9) est réalisé sous la forme d'un référentiel 2D.

10. Dispositif client (2) selon la revendication 7 ou 8, **caractérisé en ce que** le référentiel est réalisé sous la forme d'un référentiel 3D (9) ou d'un système de coordonnées sphérique.

11. Procédé d'affichage d'images de caméra sur un écran (5), comportant un dispositif client (2) selon l'une quelconque des revendications précédentes, dans lequel, dans une première représentation d'image, une image de caméra RÉELLE (IK) est représentée sur l'écran (5) dans un champ de vision de caméra RÉEL (IS), dans lequel un champ de vision de caméra THÉORIQUE (SS) est ensuite sélectionné, dans lequel le dispositif client (2) est réalisé de manière à ce que, après la sélection du champ de caméra THÉORIQUE (SS), son écran (5) soit amené à basculer sur une deuxième représentation ou sur une autre représentation d'image et dans lequel, après cela, dans une deuxième représentation d'image, l'image de caméra RÉELLE (IK) est affichée au moins par sections et, dans une autre représentation d'image, une image de caméra THÉORIQUE (SK) du champ de vision de caméra THÉORIQUE (SS) est affichée à une position correcte et avec une taille correcte dans le champ de vision de caméra THÉORIQUE (SS).

12. Programme d'ordinateur comportant des moyens à code de programme permettant de mettre en oeuvre toutes les étapes du procédé selon la revendication 11 lorsque le programme est exécuté sur un ordinateur et/ou sur le dispositif client (2) selon l'une quelconque des revendications 1 à 10.

13. Système de surveillance (1) comportant le dispositif client (2) selon l'une quelconque des revendications 1 à 10, **caractérisé par** la caméra (3) pouvant être commandée.

14. Système de surveillance (1) selon la revendication 13, **caractérisé en ce que** la transition du champ de vision de caméra RÉEL (IS) au champ de vision de caméra THÉORIQUE (SS) s'effectue par une modification d'une orientation de la caméra (3) et/ou par une modification d'une position de zoom (Z) de la caméra (3).
